# EUROPEAN PATENT SPECIFICATION

(11) **EP 2 355 961 B1**
(45) Date of publication and mention of the grant of the patent: **18.03.2015**
(21) Application number: 09760963.0
(22) Date of filing: 26.11.2009
(51) Int. Cl.: B26B 27/00

(54) **VEHICLE GLAZING PANEL CUT OUT APPARATUS AND TECHNIQUE**
VORRICHTUNG UND TECHNIK ZUM AUSSCHNEIDEN VON FAHRZEUGVERGLASUNGSSCHEIBEN
DÉCOUPAGE DE PANNEAU DE VITRAGE DE VÉHICULE ET TECHNIQUE ASSOCIÉE

(30) Priority: 08.12.2008 GB 0822316
(43) Date of publication of application: 17.08.2011
(73) Proprietor: Belron Hungary Kft - Zug Branch, 6304 Zug (CH)
(72) Inventor: FINCK, William, Essex CM15 9EP (GB)
(74) Representative: Davies, Gregory Mark
(86) International application number: PCT/GB2009/002757
(87) International publication number: WO 2010/067046

(56) References cited:
- WO-A1-98/58779
- WO-A1-2004/103748
- WO-A1-2006/030212
- US-A- 5 622 093

## Description

The present invention relates to a vehicle glazing panel cut out technique.

Vehicle glazing panels such as vehicle windscreens (windshields) are typically bonded in supporting frames by adhesive bonding material such as polyurethane, applied in a continuous bead about the periphery of the glazing panel and frame.

Wire cutting techniques have been previously proposed and used to effect glazing panel removal (for replacement or otherwise). Exemplary techniques are disclosed in, for example, EP-A-0093283, Canadian Patent Specification 2034229 , US Patent 6616800,

German Patent 4012207 and PCT Publications WO2006/030212, WO86/07017 and WO98/58779. In particular WO2006/030212, which is considered to be the closest prior art and discloses the preamble of claim 1, discloses a technique in which during cutting the wire can be operated in certain circumstances to slip or slide with respect to the bonding material in order to saw or cut through the bonding material. This has proved advantageous.

An improved technique and apparatus has now been devised.

According to a first aspect, the present invention provides a glazing panel cut out system for use with a cutting wire in cutting out a vehicle glazing panel cut out procedure, the system including:
a dispenser unit for dispensing cutting wire the dispenser having means for mounting to the glazing panel and enabling cutting wire to be payed out from the dispenser whilst mounted to the glazing panel during the cut out procedure; and;
a winder unit including;
   a mounting arrangement for mounting the winder unit on the glazing panel;
   at least one winder spool for winding cutting wire dispensed from the dispenser.

According to a second aspect, the invention provides a method of cut out of a vehicle glazing panel bonded in a frame by means of interposed bonding material, the method comprising:
setting a wire winder unit on the windscreen, the winder unit including one or more winder spools;
setting a wire dispenser unit on the windscreen, looping the cutting wire about the periphery of the glazing panel and connecting a free end of the wire payed out from the dispenser to the winder spool of the winder unit;
operating the winder spool of the winder unit to wind the wire and thereby cut the bonding material, wherein during cutting wire is payed out from the dispenser unit to effect slip cutting of the bonding material.

According to either aspect, the present invention provides advantages over the prior art because the use of a wire spool dispenser provides the benefit of enabling 'slip cutting' to be achieved whilst ensuring that the second free end of the wire need only be cut when the overall required wire length is known following cut out of a large proportion of the windscreen.

In one realisation of the method, it is preferred that he dispenser unit and the winder unit are mounted on opposed surfaces of the glazing panel.

According to the method, following operation of the winder unit to cut out a portion of the glazing panel, a length of wire may be payed out of the dispenser unit and cut to form a further free end, the further free end then being connected to a winder spool of the winder unit, which spool is then wound to effect cutting out of a further portion of the glazing panel.

In a preferred realisation of the invention, the wire payed out from the dispenser unit passes via a brake or drag device to inhibit or hinder paying out of the wire from the dispenser unit. The brake or dag device may be a patch of adhesive tape secured to the glazing panel overlaying a length of the wire extending from the dispenser unit.

In a preferred realisation of the invention, the winder unit includes first and second winder spools for winding the cutting wire. Beneficially in such an arrangement, the respective free ends of the wire are attached to different respective winder spools of the winder unit.

The winder unit may in a preferred embodiment include at least one wire wrap around guide element spaced from the winder spool and/or the mounting means, preferably comprising a guide wheel or pulley rotatably mounted with respect to the winder unit. This is not an essential feature for all envisaged embodiments, but does enable smoother winding of the wire and reduce the risk of wire breakage.

In one embodiment the wire dispenser unit includes a rotatable spool for paying out the wire. Beneficially, the mounting means for the dispenser unit comprises a suction mount. The dispenser unit is preferably capable of being mounted on a central zone of the glazing panel.

In a preferred embodiment of a winder unit, two winder spools are arranged in side by side arrangement an a respective wire guide wheel or pulley is positioned outwardly of each respective winder spools.

The winder spool may include a ratchet arrangement enabling spool rotation in one or other direction to be inhibited.

The invention will now be further described in a specific embodiment by way of example only and with reference to the accompanying drawings, in which;
Figure 1 is a schematic plan view of a winder unit of an exemplary cut out system in accordance with the invention;
Figures 2 to 4 are schematic representations in sequence of a cut out technique in accordance with the invention;

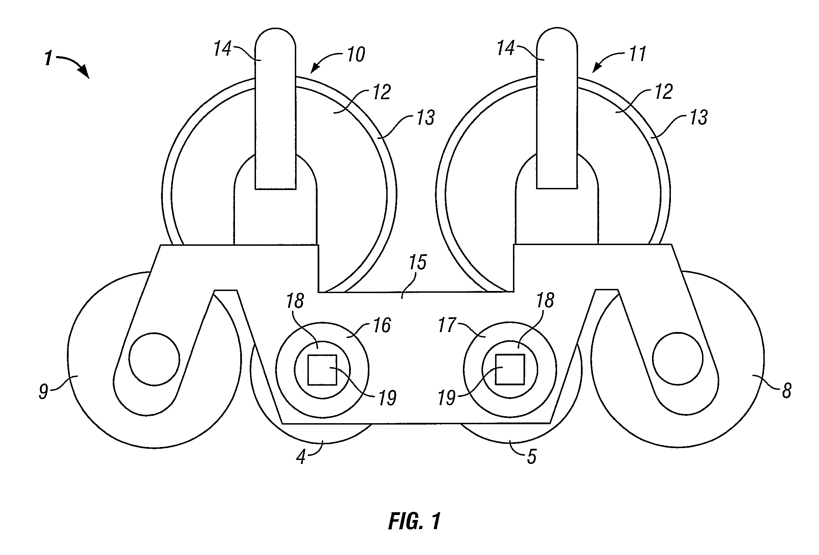

Referring to the drawings, and initially to figures 1 to 4, there is shown a cut out system particularly for use in cut out of bonded vehicle glazing panels such as windscreens. The cut out system comprises a winder unit 1 and a wire dispenser unit 2.

The winder unit 1 comprises a pair of releasable suction cup mounts 10, 11 enabling the winder unit to be releasably secured to the windscreen. The suction cup mounts comprise a rigid plastics cup 12 and underlaying flexible rubber skirt membrane 13. Respective actuation/release levers 14 enable consistent suction to be applied and released. Such suction mounts are commonly employed in windscreen replacement and repair technology. The suction cup mounts 10, 11 are pivotably/tiltably mounted to the support bracket 15 of the winder unit to ensure that both mounts 10, 11 can locate in good engagement with the windscreen despite the curvature of the windscreen. The main body of the support bracket 15 carries a pair of underslung winding spools 4, 5 in side by side relationship. The spools are connected to axial winding shafts which are supported in bearings 16, 17 provided on the winder unit. The spools 4, 5 are driven axially rotationally either manually via a hand winder or by means of a mechanical actuator such as a motorised winding or winching tool.

Drive bosses 18 are provided with female sockets 19 (square bores) for receiving the male driving tool. Positioned outwardly of the winding spools are respective wire guide pulley wheels 8, 9 of low friction plastics material. The pulley wheels are mounted to be rotatable about respective rotational axes. The guide pulleys rotate as the cutting wire is drawn tangentially across the pulleys as will be described. The winder spools 4, 5 are held to rotate in one direction only (each in opposite senses) by respective ratchet mechanisms. Each mechanism includes ratchet override permitting prior tightened wire to be slackened, or unwound (reverse wound).

A prior art technique is disclosed in WO2006/030212 and in particular, in the technique shown in figures 9 and 10 of that disclosure, the glazing panel is removed using a wire 41 and the winder unit 1, which is initially secured to the steering wheel side of the glazing panel, positioned above the steering wheel as shown in figure 9. With the winder unit and guide arrangement in position as described, the cutting wire is looped around the outside of the windscreen to lie peripherally adjacent the bonding bead which is sandwiched between the glazing panel and the support frame of the vehicle. Opposed ends of the cutting wire are fed through a pierced channel made through the bonding bead in the corner of the windscreen (x) below the position of the winder unit 1.

A length 41 of the wire is pulled through to the interior of the vehicle and passed around pulley wheel 9 of the winder unit and connected for winding to the winder spool 5 of the winder unit. A free end length of wire 47 is pulled through, being of length sufficient to reach the upper left hand corner of the glazing panel. Winder spool 5 is then operated to cause the wire length 41 to cut through the bonding bead upwardly along the side of the windscreen, until the cut line has passed around the upper right hand corner of the screen. At this juncture, the unit 1 is removed from the screen and repositioned on the glazing panel in the upper left hand corner as shown in figure 10. Prior to repositioning the unit 1, the ratchet of winder spool 5 is released to permit the wire to be wound out from the spool as it is moved across the glazing panel to be repositioned. The ratchet is subsequently reengaged and spool 5 once again operated to wind in the wire from the position shown in figure 10 until it reaches the position shown in the dashed line in figure 10.

Next the unit 1 is moved around the corner of the glazing panel and through substantially a right angle, to the position shown in figure 11, where it is secured to the glazing panel. In order to enable this to be achieved, the ratchet of spool 5 is again released and subsequently re-engaged when the unit is in position as shown in figure 11. The end of the free length of wire 47 is then wound around pulley 8 and connected to winder spool 4 and the spools 4 and 5 operated either sequentially (or simultaneously)to complete the cut. As shown in figure 11. The lengths of wire cross at Z in order to complete the cut.

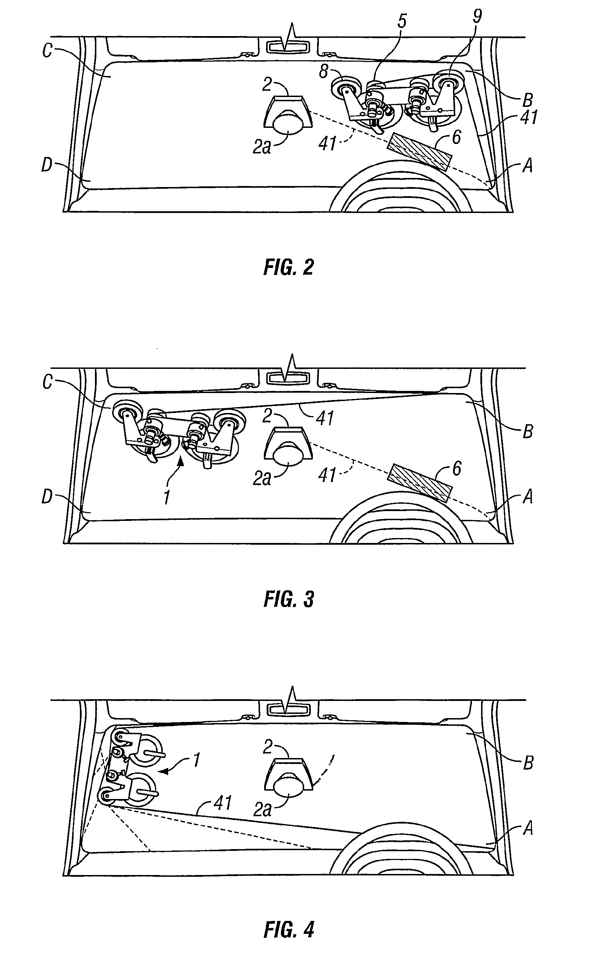

In accordance with the present invention the winder unit 1 is secured internally of the vehicle to the surface of the glazing panel 3 above the steering wheel as shown in figure 2. A wire dispenser spool 2 is secured to the exterior surface of the glazing panel 3 and the wire 41 is wrapped around the external peripheral edge of the glazing panel starting at corner A and proceeding to corners B C and D. The wire subsequently passes adjacent the lowermost edge of the screen (from D toward A) where a free end is pulled through an aperture made in the PU bonding bead at the corner A, such that the free end of the wire can be attached to winder spool 5. An adhesive tape patch 6 is secured to the screen over the wire. The dispenser spool 2 includes a sucker mount 2a and an internal wire dispenser cartridge which is free to rotate in a housing so as to pay out wire from the dispenser spool as tension of a required magnitude is put upon the wire. The adhesive tape patch is used to give resistance to paying out of the wire from the spool. Other brake devices (typically resistance or friction providing devices may be used in addition to or as an alternative to the adhesive patch 6).

Removal is commenced by winding the spool 5 to move the cut from the corner A upwardly along the side edge and around corner B. During cutting, if excessive resistance occurs, from tough or large PU adhesive beads, the wire is able to spool off the dispenser spool 2 and slip and slice past the PU adhesive. The use of the spool dispenser mounted on the windscreen enables this 'slip cutting' to occur early in the cut out procedure and without pre cutting of the other free end of the wire 41. Once the cutting wire 40 has travelled around the corner B, the winder unit 1 is moved across the windscreen to the other side and re-secured to the windscreen in the configuration shown in figure 3. Prior to repositioning the unit 1, the ratchet of winder spool 5 is released to permit the wire to be wound out from the spool 5 as it is moved across the glazing panel to be repositioned. The ratchet is subsequently re-engaged and spool 5 once again operated to wind in the wire.

When the cut has almost been completed along the top edge, the winder unit is rotated through 90 degrees and re-secured as shown in figure 4. The cut is then progressed such that the cut position passes around the corner C. The adhesive tape 6 is next removed and enough wire is payed out from the dispenser spool 2 to reach and be wound on the winder spool. The measured length of wire is then cut from the dispenser spool and the cut free end is pulled into the vehicle either by prising out the already released corner of the windscreen to form a small gap, or insertion of the free wire end through the pre-formed hole in the PU bonding material at corner A. The free end of the wire 41 is then connected to the spool 4 (passing around pulley 8). The winder spool 4 is then operated to wind in the wire, in so doing cutting along the bottom edge.

The present invention provides the benefits of wire cutting systems without over complex system apparatus arrangements or the need to re configure the apparatus significantly following initial set up. The technique can be used by operators of relatively little experience or physical strength following an initial set up routine of minimal complexity.

The use of a wire spool dispenser provides the benefit of enabling 'slip cutting' to be achieved whilst ensuring that the second free end of the wire need only be cut when the overall required wire length is known following cut out of a large proportion of the windscreen.

## Claims

1. A glazing panel cut out system for use with a cutting wire (41) in cutting out a vehicle glazing panel cut out procedure, the system including:
a winder unit (1) including;
a mounting arrangement (10, 11) for mounting the winder unit on the glazing panel;
at least one winder spool (4, 5) for winding the cutting wire,
**characterised in that** the cutting wire is dispensed from a dispenser unit, the dispenser unit having means for mounting to the glazing panel (3) and enabling the cutting wire (41) to be payed out from the dispenser unit whilst mounted to the glazing panel (3) during the cut out procedure.

2. A system according to claim 1, wherein the winder unit includes at least one wire wrap around guide element spaced from the winder spool and/or the mounting means.

3. A system according to claim 1 or claim 2, wherein the winder unit includes first and second winder spools (4, 5) for winding the cutting wire.

4. A system according to any preceding claim, wherein the dispenser unit (2) and the winder unit (1) are mounted to opposed faces of the glazing panel (3).

5. A system according to any preceding claim, wherein the wire dispenser unit includes a rotatable spool (2) for paying out the wire.

6. A system according to any preceding claim, wherein the mounting means for the dispenser unit comprises a suction mount (2a).

7. A system according to any preceding claim, wherein a brake or drag arrangement (6) is provided to brake or hinder the paying out of the wire from the dispenser unit.

8. A system according to claim 3, wherein the wrap around guide element comprises a guide wheel or pulley (8, 9) rotatably mounted with respect to the winder unit.

9. A system according to any preceding claim, wherein two winder spools (4, 5) are arranged in side by side arrangement and a respective wire guide wheel or pulley (8, 9) is positioned outwardly of each respective winder spools.

10. A system according to any preceding claim, wherein the winder spool (4, 5) includes a ratchet arrangement enabling spool rotation in one or other direction to be inhibited.

11. A method of cut out of a vehicle glazing panel bonded in a frame by means of interposed bonding material, the method comprising:
setting a wire winder unit (1) on the windscreen (3), the winder unit including one or more winder spools (4, 5);
setting a wire dispenser unit on the windscreen, looping the cutting wire (41) about the periphery of the glazing panel and connecting a free end of the wire payed out from the dispenser to the winder spool of the winder unit;
operating the winder spool (4, 5) of the winder unit to wind the wire (41) and thereby cut the bonding material, wherein during cutting wire is payed out from the dispenser unit to effect slip cutting of the bonding material.

12. A method according to claim 11, wherein the dispenser unit and the winder unit are mounted on opposed surfaces of the glazing panel (3).

13. A method according to claim 11, or claim 12, wherein following operation of the winder unit (1) to cut out a portion of the glazing panel (3), a length of wire is payed out of the dispenser unit and cut to form a further free end, the further free end then being connected to a winder spool (4, 5) of the winder unit, which spool is then wound to effect cutting out of a further portion of the glazing panel.

14. A method according to any of claims 11 to 13, wherein the wire payed out from the dispenser unit passes via a brake or drag device (6) to inhibit paying out of the wire from the dispenser unit.

15. A method according to any preceding claim, wherein the respective free ends of the wire (41) are attached to different respective winder spools (4, 5) of the winder unit.

## Patentansprüche

1. Ein System zum Ausschneiden von Verglasungsscheiben mit einem Schneiddraht (41) zum Ausschneiden in einem Verfahren zum Ausschneiden von Fahrzeugverglasungsscheiben, wobei das System umfasst:
eine Wickeleinrichtung (1), umfassend,
eine Montageanordnung (10, 11) zum Befestigen der Wickeleinrichtung an der Verglasungsscheibe;
mindestens eine Wickelspule (4, 5) zum Aufwickeln des Schneiddrahtes,
**dadurch gekennzeichnet, dass** der Schneiddraht aus einer Abgabeeinheit abgegeben wird, wobei die Abgabeeinheit Mittel zum Montieren an der Verglasungsscheibe (3) und zum Abgeben des Schneiddrahtes aus der Abgabeeinheit aufweist, solange diese während des Ausschneidevorganges an der Verglasungsscheibe (3) montiert ist.

2. Ein System nach Anspruch 1, wobei die Wickeleinrichtung mindestens ein Drahtumlauf-Führungselement umfasst, das im Abstand zur Wickelspule und/oder den Montagemitteln angeordnet ist.

3. Ein System nach Anspruch 1 oder Anspruch 2, wobei die Wickeleinrichtung eine erste und eine zweite Wickelspule (4, 5) zum Aufwickeln des Schneiddrahtes aufweist.

4. Ein System nach einem der vorstehenden Ansprüche, wobei die Abgabeeinheit (2) und die Wickeleinrichtung (1) auf gegenüberliegenden Flächen der Verglasungsscheibe (3) montiert sind.

5. Ein System nach einem der vorstehenden Ansprüche, wobei die Draht-Abgabeeinheit eine drehbare Spule (2) zum Ausgeben des Drahtes aufweist.

6. Ein System nach einem der vorstehenden Ansprüche, wobei die Montagemittel für die Abgabeeinheit eine Saughalterung (2a) aufweist.

7. Ein System nach einem der vorstehenden Ansprüche, wobei eine Brems- oder Hemmanordnung (6) vorgesehen ist, um das Abgeben des Drahtes aus der Abgabeeinheit zu bremsen oder zu erschweren.

8. Ein System nach Anspruch 3, wobei das Drahtumlauf-Führungselement ein Führungsrad oder -rolle (8, 9) aufweist, welches, bezogen auf die Wickeleinrichtung, drehbar montiert sind.

9. Ein System nach einem der vorstehenden Ansprüche, wobei zwei Wickelspulen in einer nebeneinanderliegenden Anordnung angeordnet sind und ein jeweiliges Drahtführungsrad oder -rolle (8, 9) außerhalb jeder entsprechenden Wickelspule angeordnet ist.

10. Ein System nach einem der vorstehenden Ansprüche, wobei die Wickelspule (4, 5) eine Sperrklinkenanordnung umfasst, die eine Spulendrehung in eine Richtung ermöglicht und in die andere Richtung blockiert.

11. Ein Verfahren zum Ausschneiden einer Fahrzeugverglasungsscheibe, welche mittels eines dazwischenliegenden Verbindungsmaterials in einen Rahmen eingeklebt wird, wobei das Verfahren umfasst:
Setzen einer Draht-Wickeleinrichtung (1) auf die Windschutzscheibe (3), wobei die Wickeleinrichtung ein oder mehrere Wickelspulen (4, 5) umfasst;
Setzen einer Draht-Abgabeeinheit auf die Windschutzscheibe, Schlingenbildung des Schneidedrahtes (41) über den Umfang der Verglasungsscheibe und Verbinden eines freien Ende des Drahtes, der aus der Abgabe ausgegeben wird, mit der Wickelspule der Wickeleinrichtung;
Betreiben der Wickelspule (4, 5) der Wickeleinrichtung, um den Draht (41) aufzuwickeln und dadurch das Verwindungsmaterial geschnitten wird, wobei während des Schneidens der Schneiddraht aus der Abgabeeinheit abgegeben wird, um einen Gleitschnitt des Verbindungsmaterials zu bewirken.

12. Ein Verfahren nach Anspruch 11, wobei die Abgabeeinheit und die Wickeleinrichtung auf gegenüberliegenden Flächen der Verglasungsscheibe (3) montiert sind.

13. Ein Verfahren nach Anspruch 11 oder nach Anspruch 12, wobei nach dem Betreiben der Wickeleinrichtung (1), um einen Teil der Verglasungsscheiben (3) auszuschneiden, eine Länge des Drahtes aus der Abgabeeinheit ausgegeben und geschnitten wird, um ein weiteres freies Ende auszubilden, wobei das weitere freie Ende mit der Wickelspule (4, 5) der Wickeleinrichtung verbunden wird, wobei die Spule dann aufgewickelt wird, um das Ausschneiden eines weiteren Teils der Verglasungsscheibe zu bewirken.

14. Ein Verfahren nach einem der Ansprüche 11 bis 13, wobei der Draht, der aus der Abgabeeinrichtung ausgegeben wird, über eine Brems- oder Hemmvorrichtung (6) gelangt, um das Ausgeben des Drahtes aus der Abgabeeinheit zu hemmen.

15. Ein Verfahren nach einem der vorstehenden Ansprüche, wobei das jeweiligen freien Enden des Drahtes (41) an jeweils verschiedenen Wickelspulen (4, 5) der Wickeleinrichtung befestigt werden.

## Revendications

1. Système de découpe de panneau de vitrage destiné à être utilisé avec un fil de coupe (41) dans la découpe d'une procédure de découpe de panneau de vitrage de véhicule, le système comprenant :
une unité d'enroulage (1) comprenant :
un dispositif de montage (10, 11) pour monter l'unité d'enroulage sur le panneau de vitrage ;
au moins une bobine d'enroulage (4, 5) pour enrouler le fil de coupe,
**caractérisé en ce que** le fil de coupe est distribué à partir d'une unité de distribution, l'unité de distribution comportant des moyens pour le montage sur le panneau de vitrage (3) et permettant au fil de coupe (41) d'être déroulé de l'unité de distribution lorsqu'ils sont montés sur le panneau de vitrage (3) durant la procédure de découpe.

2. Système selon la revendication 1, dans lequel l'unité d'enroulage comprend au moins un élément de guidage d'enroulement de fil espacé de la bobine d'enroulage et/ou des moyens de montage.

3. Système selon la revendication 1 ou la revendication 2, dans lequel l'unité d'enroulage comprend des première et seconde bobines d'enroulage (4, 5) pour enrouler le fil de coupe.

4. Système selon l'une des revendications précédentes, dans lequel l'unité de distribution (2) et l'unité d'enroulage (1) sont montées sur des faces opposées du panneau de vitrage (3).

5. Système selon l'une des revendications précédentes, dans lequel l'unité de distribution de fil comprend une bobine rotative (2) pour dérouler le fil.

6. Système selon l'une quelconque des revendications précédentes, dans lequel les moyens de montage pour l'unité de distribution comprennent un support d'aspiration (2a).

7. Système selon l'une des revendications précédentes, dans lequel un dispositif de freinage ou à traînée (6) est prévu pour freiner ou entraver le déroulement du fil à partir de l'unité de distribution.

8. Système selon la revendication 3, dans lequel l'élément de guidage d'enroulement comprend une roue ou poulie de guidage (8, 9) libre en rotation par rapport à l'unité d'enroulage.

9. Système selon l'une des revendications précédentes, dans lequel deux bobines d'enroulage (4, 5) sont agencées en agencement côte à côte et une roue ou poulie de guidage de fil respective (8, 9) est positionnée vers l'extérieur de chaque bobine d'enroulage respective.

10. Système selon l'une des revendications précédentes, dans lequel la bobine d'enroulage (4, 5) comprend un dispositif à rochet empêchant la rotation de bobine dans l'une ou l'autre des directions.

11. Procédé de découpe d'un panneau de vitrage de véhicule lié à un cadre au moyen de matériau liant interposé, le procédé comprenant :
la pose d'une unité d'enroulage de fil (1) sur le pare-brise (3), l'unité d'enroulage comprenant une ou plusieurs bobines d'enroulage (4, 5) ;
la pose d'une unité de distribution de fil sur le pare-brise, le bouclage du fil de coupe (41) sur la périphérie du panneau de vitrage et le raccordement d'une extrémité libre du fil déroulé du distributeur à la bobine d'enroulage de l'unité d'enroulage ;
la manoeuvre de la bobine d'enroulage (4, 5) de l'unité d'enroulage pour enrouler le fil (41) et ainsi couper le matériau liant, dans lequel, durant la coupe, le fil est déroulé de l'unité de distribution pour effectuer une coupe à glissement du matériau liant.

12. Procédé selon la revendication 11, dans lequel l'unité de distribution et l'unité d'enroulage sont montées sur des surfaces opposées du panneau de vitrage (3).

13. Procédé selon la revendication 11, ou la revendication 12, dans lequel, après la manoeuvre de l'unité d'enroulage (1) pour découper une partie du panneau de vitrage (3), une longueur de fil est déroulée de l'unité de distribution et coupée pour former une extrémité libre supplémentaire, l'extrémité libre supplémentaire étant alors raccordée à une bobine d'enroulage (4, 5) de l'unité d'enroulage, laquelle bobine est alors enroulée pour effectuer la découpe d'une partie supplémentaire du panneau de vitrage.

14. Procédé selon l'une quelconque des revendications 11 à 13, dans lequel le fil déroulé de l'unité de distribution passe par l'intermédiaire d'un dispositif de freinage ou à traînée (6) pour empêcher le déroulement du fil de l'unité de distribution.

15. Procédé selon l'une quelconque des revendications précédentes, dans lequel les extrémités libres respectives du fil (41) sont fixées à différentes bobines d'enroulage respectives (4, 5) de l'unité d'enroulage.
